(19) Europäisches Patentamt
European Patent Office
Office européen des brevets

(11) **EP 4 124 921 B1**

(12) **EUROPEAN PATENT SPECIFICATION**

(45) Date of publication and mention
of the grant of the patent:
**27.08.2025 Bulletin 2025/35**

(21) Application number: **22186481.2**

(22) Date of filing: **22.07.2022**

(51) International Patent Classification (IPC):
*G05B 23/02* (2006.01)      *G06Q 10/20* (2023.01)
*G07C 5/00* (2006.01)

(52) Cooperative Patent Classification (CPC):
**G05B 23/0283; G06Q 10/20;** G07C 5/006

(54) **USAGE BASED MAINTENANCE SCHEDULING SYSTEM**

NUTZUNGSBASIERTES WARTUNGSPLANUNGSSYSTEM

SYSTÈME DE PLANIFICATION DE MAINTENANCE BASÉ SUR L'UTILISATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **30.07.2021   US 202163227392 P
02.09.2021   US 202117464837**

(43) Date of publication of application:
**01.02.2023   Bulletin 2023/05**

(73) Proprietor: **RTX Corporation
Farmington, CT 06032 (US)**

(72) Inventors:
• OWEN, William D.
  **Windsor, 06095 (US)**
• HALL, Benjamin D.
  **Glastonbury, 06033 (US)**
• COLEMAN, Emily Carolyn Roto
  **Worcester, 01605 (US)**
• SANTOR, Cami
  **Glastonbury, 06033 (US)**
• KACHEL, Eric D.
  **Vernon, 06066 (US)**
• BROWN, Alex J.
  **Vernon, 06066 (US)**

(74) Representative: **Dehns
10 Old Bailey
London EC4M 7NG (GB)**

(56) References cited:
**EP-A1- 3 736 778       US-A1- 2018 328 221
US-A1- 2020 356 958**

## Description

## TECHNICAL FIELD

The present disclosure relates generally to maintenance scheduling for aircraft engines, and more particularly to a scheduling system based on the actual usage of the aircraft engine.

## BACKGROUND

Traditional maintenance scheduling for aircraft engines includes a combination of life expectancy and observational scheduling, with the life expectancy scheduling being predetermined based on an expected use case and the structure of the component, and the observational being based on routine and periodic observation of specific components to identify damage.

Observational scheduling generally includes high frequency maintenance intended to prevent failure in components prone to Foreign Object Damage (FOD). Observational scheduling assumes a worst-case scenario of engine operation and FOD when defining inspection frequency and damage limits. Due to the worst-case scenario assumptions, observed FOD can lead to immediate unscheduled maintenance that may not be required to prevent component failure.

Predetermined, or life expectancy based, maintenance schedules are generally low frequency, primarily intended to prevent failure in components from damage incurred during an assumed engine operation, which may be conservative, e.g., aggressive use in harsh environments with more FOD assumed than experience might dictate.

In scheduling both life expectancy and observational based maintenance, assumptions are made interms of both the stress-state from vibration modes and stress increase due to FOD exposure and severity. These assumptions can result in increased fleet sustainment cost through unnecessary inspection and repair operations.

US 2018/328221 A1 discloses a prior art system and method for planning engine borescope inspections based on FOD probability estimation.

EP 3 736 778 A1 discloses prior art predictive part maintenance.

## SUMMARY OF THE INVENTION

From one aspect, there is provided a process for scheduling engine inspection for a gas turbine engine as recited in claim 1.

There is also provided a computer system for determining maintenance schedules for a gas turbine engine not presently claimed.

Features of embodiments are set forth in the dependent claims.

These and other features of the present invention can be best understood from the following specification and drawings, the following of which is a brief description.

## BRIEF DESCRIPTION OF THE DRAWINGS

Figure 1 schematically illustrates a gas turbine engine according to one example.
Figure 2 illustrates a high level exemplary process for implementing a usage based maintenance scheduling system.
Figure 3 illustrates an example operation of the process of Figure 2 over time.
Figure 4 schematically illustrates a flow model of a computer system for implementing the process of Figure 1.
Figure 5 illustrates an example fatigue assessment of the damage calculation.
Figure 6 illustrates a cumulative damage over flights of an example aircraft.
Figure 7 illustrates specific risk curves corresponding to the cumulative damages of Figure 6.
Figure 8 illustrates the aggregate risk curve of all of the risk curves of Figure 7.

## DETAILED DESCRIPTION

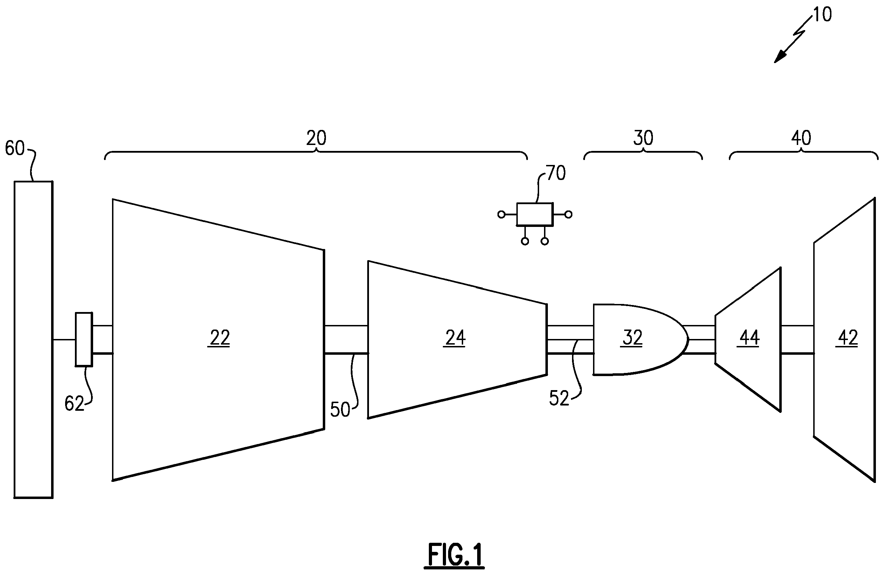

Figure 1 illustrates an exemplary gas turbine engine 10, including a compressor section 20 connected to a combustor section 30 and a turbine section 40 via a first shaft 50 and a second shaft 52. The exemplary compressor section includes a low pressure compressor 22 fluidly connected to a high pressure compressor 24. An output of the high pressure compressor 24 is provided to at least one combustor 32 within the combustor section 30. The at least one combustor 32 mixes the output of the high pressure compressor 24 with a fuel and combusts the mixture. The resultant combustion products are provided to a high pressure turbine 44 along the flowpath. The high pressure turbine expands the combustion products which drives rotation of the high pressure turbine and the second shaft 52. Similarly, the output of the high pressure turbine 44 is provided to a low pressure turbine 42 and expanded. The expansion across the low pressure turbine 42 drives rotation of the low pressure turbine 42 and rotation of the first shaft 50. The second shaft 52 is connected to the high pressure compressor 24 and drives rotation of the high pressure compressor 24. Similarly, the first shaft 50 is connected to, and drives rotation of the low pressure compressor 22. A fan 60 is disposed upstream of the low pressure compressor 22 and is driven to rotate via a geared connection 62 to the first shaft 50. In alternate examples, the fan 60 can be connected via a direct drive, omitting the geared connection 62.

The gas turbine engine 10 described above, and illustrated in Figure 1 is exemplary in nature, and it is appreciated that the following systems and processes can be applied similarly to any other aircraft engine, even when the other engine deviates substantially from the generally described construction. Due to the design and operating environment of the engine 10, certain components such as fan blades and compressor blades are subject to damage from debris and other ingested objects. The damage is referred to as foreign object damage (FOD).

During operation of the gas turbine engine 10, a data recorder 70 that is either local to the engine 10 (as in the example of Figure 1), or within the aircraft and connected to sensors within the engine, stores flight operational data including, but not limited to rotor speed, time history, total engine flight hours, engine flight hours at maximum operating conditions, pressure and temperature at 1 or more engine station, aircraft altitude and mach number or forward velocity, crosswind speed, direction and any similar metrics. Flight operational data is at least partially determined via onboard sensors according to any known sensor configuration. Additional flight operational data can be inferred from one or more sensors according to known correlations and/or derived at least partially from engine control signals throughout the flight. After the flight, the data recorder is physically removed from the aircraft and provided to a computer system for analysis. In alternative examples, the aircraft can be physically connected to the computer system upon landing via a communication connection, or the data recorder can communicate wirelessly with the land-based computer system. In yet further alternative designs, a computer or controller onboard the aircraft can perform the process described below.

Rather than following a predefined time or flight hours-based maintenance and inspection schedule, the system described herein applies usage data from the flight data recorder to determine a probability of damage or risk of component failure ("risk"). Risk is then used to order maintenance as needed. This is referred to herein as "usage-based scheduling". Usage-based scheduling offers reduced maintenance frequency by accounting for actual engine use to reduce or eliminate conservative assumptions that are necessary to define an observational or predetermined maintenance schedule.

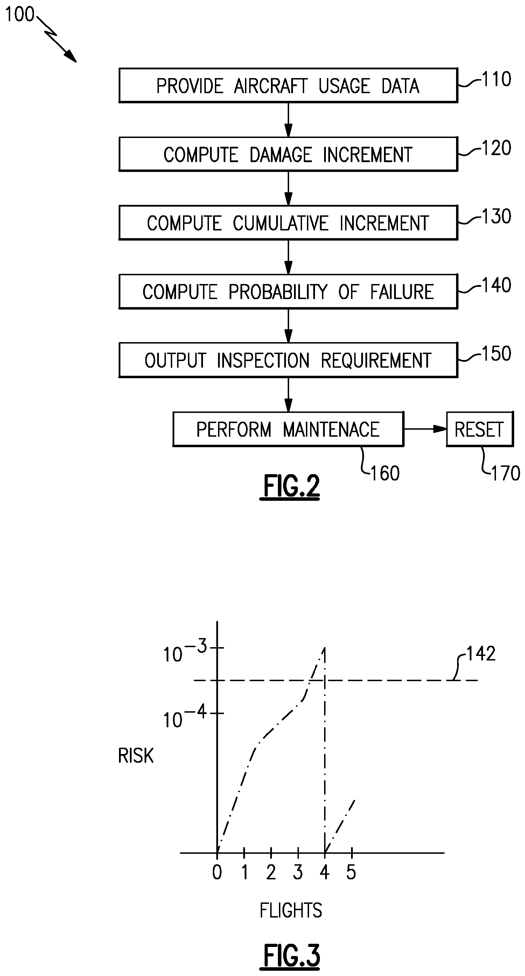

Figure 2 provides a general overview of the usage-based scheduling system for determining when manual inspections and maintenance are required to identify and repair foreign object damage for a given engine in a gas turbine engine, such as the engine 10 illustrated in figure 1. After each flight the aircraft data recorder is connected to a computer, and the flight data is provided to an analysis system in a "Provide Aircraft Usage Data" step 110.

The aircraft usage data includes engine metrics measured by conventional engine sensors, such as those described above. By way of example, one engine metric that can be used is rotor speed which infers exposure to vibrational modes which can also be correlated to various types of foreign object damage or debris ingestion events. The total stress state, defined by the combination of active vibrational modes and foreign object damage which acts as a stress riser, is determined throughout a time history. The stress time history is then used to calculate a damage increment. In practice, usage data is applied to a set of models to compute the expected damage increment for the specific flight in a "Compute Damage Increment" step 120. The expected damage increment is calculated using a probabilistic foreign object damage model at least partially dependent on and continuously calibrated to, statistical data sets of previous inspection and usage data and assuming that foreign object damage has occurred for each flight and at each potential foreign object damage zone of the component. In examples using vibrational modes to correlate with occurrences of foreign object damage and/or debris ingestion, the expected damage increment is calculated at each mode of vibration that is excited in the engine by measuring or computing the time history of the response. In some examples, the foreign object damage model is an engineering model.

The damage is summed for contributing modes of vibration to determine the damage increment for the specific flight. In some examples, after a certain number of iterations, the engineering model for foreign object damage is manually revised based on empirical results in the field to account for new inspection and usage data. This update can be performed manually, automatically, or both, depending on the type of inspection and usage data acquired.

Once the expected damage increment has been calculated, the system applies the increment to the damage history of the engine in a "Compute Cumulative Damage" step 130. The cumulative damage represents the total deterioration over time of the engine components since the previous maintenance. In a practical example there are a large number of cumulative damage values that are independently tracked, and the complexity resulting from the amount of tracked values would take longer to calculate manually than there is time between flights and the process could not be practicably achieved without computer assistance.

After determining the cumulative damage values, the probability of failure of the components in a subsequent flight is determined in a "Compute Probability of Failure" step 140. The probability of failure is calculated for each possible foreign object damage location from each flight that has occurred since the previous maintenance. This process is repeated for each airfoil or airfoil type separately, and in the aggregate, as well as for any other components that are susceptible to foreign object damage. By way of example, if any components, such as blades include unique information or attributes, each of the components that have unique information is analyzed independently to account for the special information. Alternatively, when an assembly such as a bladed wheel includes, as a whole, a defining feature such as intentional mistuning, the components of the assembly driving the defining feature are analyzed in the aggregate.

When the probability of failure on the next flight (alternately referred to as "risk") exceeds a predefined threshold, the system 100 outputs an inspection requirement in an "Output Inspection Requirement" step 150. In one example, the risk threshold is in the range of 1/100000 to 1/10000, although specific implementations may stray from that range depending on the particular usage of the engine and aircraft in question, as well as the applicable industry or internal standards. When the probability of failure is below the risk threshold an inspection is not ordered, and the process is reiterated after the next flight.

When an inspection is ordered, manual inspection and maintenance is performed on the aircraft during which any damage, including foreign object damage, is manually identified and repaired by one or more technician in a "Perform Maintenance" step 160. Once any identified damage is repaired, or the corresponding components are replaced, the historical record of damage data is reset to 0 in a "Reset" step 170, and the process 100 reiterates with the next flight.

With continued reference to the process 100 of Figure 2, Figure 3 illustrates an example cycle over 5 sequential flights. After each flight, the cumulative risk (RISK) increases until the fourth flight, where the cumulative risk exceeds the predefined threshold 142. After the fourth flight, the computer system operating the process orders an inspection and maintenance is performed. In one example, the computer system assumes 100% effective inspection and maintenance and causes the cumulative risk to be reset to no cumulative risk prior the fifth flight. In other examples, the reset can account for "imperfect" maintenance by resetting to a cumulative damage value above zero. In yet further examples, the system can wait for a confirmation that the maintenance operation was successful before resetting the cumulative risk. As each damage increment is dependent on the total aircraft usage data from the corresponding flight, the number of flights or the number of flight hours between maintenance is not uniform, and the occurrence of costly and time-consuming manual inspections and maintenance is limited to times when the risk of foreign object damage exceeds an acceptable level.

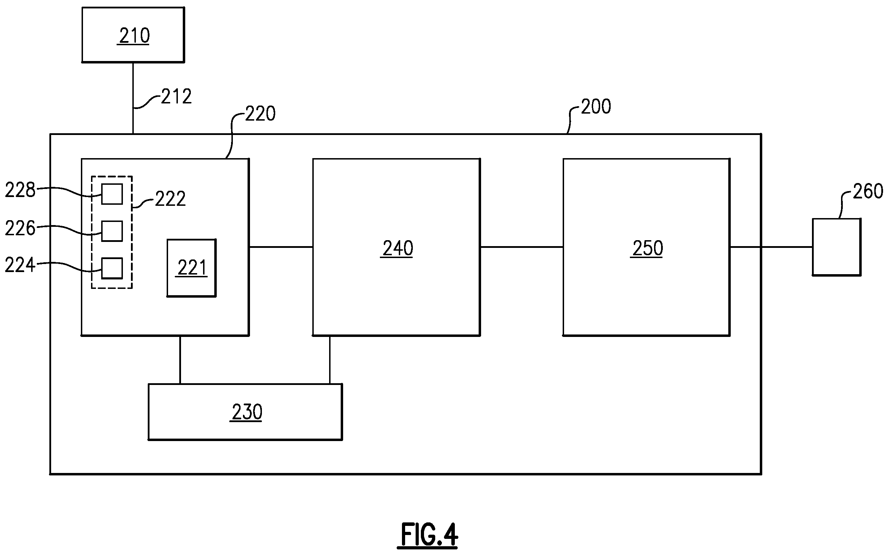

With continued reference to Figures 1-3, Figure 4 schematically illustrates an exemplary model computer system 200 for implementing the process 100 of Figure 1 including both physical components and software modules. The computer system 200 includes a flight data recorder 210 connected to the computer system 200 either via a physical data transfer connection 212 or via a wireless, or similar, data transfer connection. The aircraft usage data is provided to foreign object damage module 220 that computes the damage increment from the given flight based on the aircraft usage data, and a set of correlation models 222 including a material capability model 224, a vibratory response characterization model 226, and any other models 228 able to determine expected magnitudes of foreign object damage based on the aircraft usage data. Also included in the foreign object damage module 220 is a rate, severity, and location assessment module 221 that uses the models 222 to determine the expected rate, severity, and location of foreign object damage. In some examples, the models 222 are combined with inlet debris monitoring system readings and the exhaust distress monitoring systems data from the aircraft usage data to determine the expected rate severity, and location of foreign object damage.

Summed foreign object damage across all contributing modes of vibration that are generated by the foreign object damage module 220 is stored within a data storage component 230 during each iteration, creating a set of historical damage calculations. The data storage component 230 can be any form of data storage, and can be located internal to the computer system 200, internal to the flight data recorder 210 storing the aircraft usage data, or external to both systems.

In addition to the data storage element 230, the incremental damage that is calculated is passed to a cumulative damage module 240. The cumulative damage module 240 retrieves the stored historical damage increments from the data storage element 230 and generates the total cumulative damage, which is then provided to a risk calculation module 250. The risk calculation module 250 determines the probability of failure based on the total cumulative damage, as described above, and compares the probability of failure to the acceptable risk. When the probability exceeds the acceptable risk, the computer system provides an alert at an output system 260 that informs the technician that a manual inspection is required.

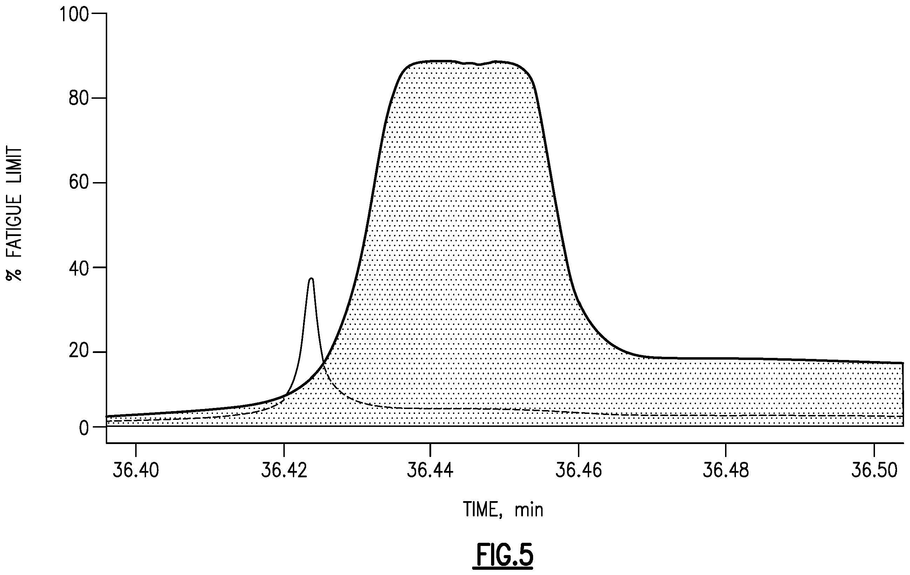

To determine the damage increment based on the material capability of the blades, a fatigue damage accumulation rule, such as Miner's Rule, is applied at each time point of a predetermined frequency and the time points are summed for each mode. In the Miner's rule example, the damage at a given time point i is defined as: $\epsilon_i = \dfrac{cycles}{cycles\ to\ failure}$ . The material capability model determines "cycles to failure" using a stress-life modeling system. In other examples, alternative modeling systems can be utilized to similar effect. Most time points have negligible damage levels of zero or approximately zero, however every time point is summed regardless of whether the damage level is approximately zero or is substantial. Figure 5 illustrates the damage increments for one zone at two modes of vibration according to an exemplary Goodman analysis model. As can be seen the illustrated two modes include spikes, or plateaus, where the damage levels are meaningful but are still primarily filled with de minimus damage levels.

In addition to Goodman modeling, a standard stress-life model defines the distribution for cycles to failure at all stress levels. Standard stress-life models are used to relate the logarithm of life to stress or the logarithm of stress. Similarly, scatter in life is quantified using standard distributions such as the lognormal, Weibull, or smallest extreme value. Model forms, as well as specific values for numeric constants are determined from specimen and/or component fatigue testing.

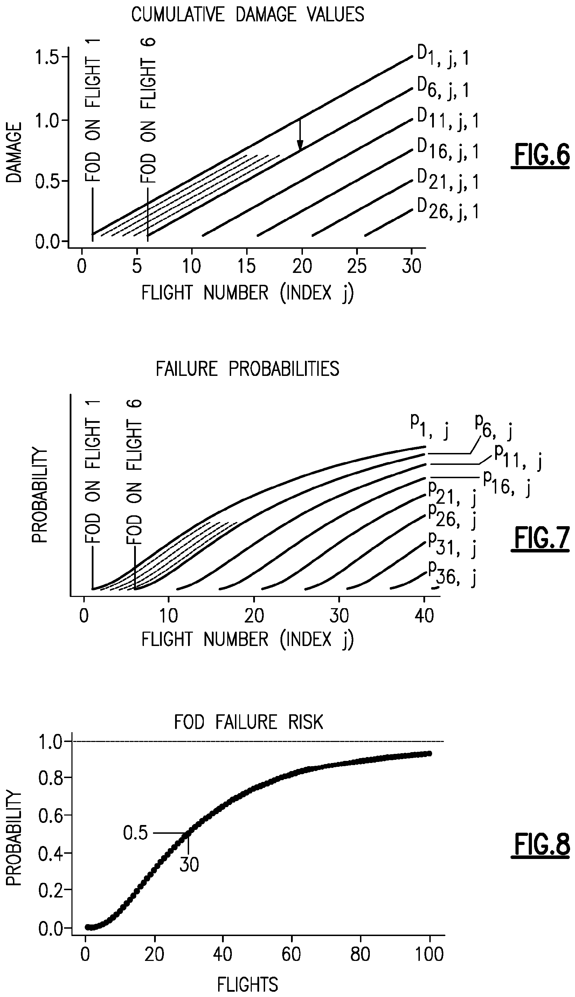

With continued reference to Figures 1-4, Figures 6-8 illustrate an exemplary process for determining an aggregate risk (Figure 8) based on the cumulative damage (Figure 6). For the sake of explanation, in the example of Figure 6, each flight produces the same damage increment (i.e., 0.05), with the set of lines in Figure 6 corresponding to a first FOD occurring on flight 1 ($D_{1,j,1}$), a first FOD occurs on flight 2 ($D_{2,j,1}$), ..., and a first FOD occurs on flight 26 ($D_{26,j,1}$). Each cumulative damage sum line from Figure 6 has an associated conditional probability of failure curve. In a practical example, the increment will not be identical between flights.

Figure 7 illustrates the conditional probabilities of failure based on the first FOD occurring on flight 1 ($p_{1,j}$), the first FOD occurring on flight 2 ($p_{2,j}$), ... and the first FOD occurring on flight 26 ($p_{26,j}$). As can be seen, each curve asymptotically approaches 1, as the failure is an eventual certainty. As the process is performed without determining or sensing actual foreign object damage occurrences it is unknown when, or if, the foreign object damage occurs. Thus, the risk curves across all 26 flights from Figure 7 are aggregated into a single risk curve, illustrated in Figure 8. The risk is aggregated using the standard rules of probability: Total Risk at Flight j = Prob(HCF @ Flight j | FOD on 1) × Prob(FOD on 1) + Prob( HCF @ Flight j | FOD on 2) × Prob(FOD on 2) + ...+ Prob( HCF @ Flight j | FOD on j) × Prob(FOD on j).

The aggregated risk is the value that is compared with the acceptable risk to determine whether an inspection and maintenance is required after each flight.

By using the above described process and system, the usage based maintenance scheduling reduces maintenance cost and increase fleet readiness by replacing traditional schedule based inspection with the above described process that predicts the need for inspection based on engine usage.

It is further understood that any of the above described concepts can be used alone or in combination with any or all of the other above described concepts. Although an embodiment of this invention has been disclosed, the invention is set out in the appended set of claims.

## Claims

1. A computer-implemented process for scheduling engine inspection for a gas turbine engine (10) comprising:

computing an expected damage increment based on aircraft usage data of a single flight, wherein the aircraft usage data omits foreign object strike detection;
computing a cumulative expected damage by summing the expected damage increment with a total set of historical expected damage increments since a previous maintenance;
determining an aggregate risk of failure based on the computed cumulative expected damage; and
signaling a manual inspection in response to the aggregate risk of failure exceeding an acceptable risk threshold (142),
wherein computing the expected damage increment comprises determining an expected damage increment at each mode of vibration that is excited in the engine, and summing the increment over all modes to determine the expected damage increment for a specific flight.

2. The process of claim 1, wherein the acceptable risk threshold (142) is in the range of 1/100000 to 1/10000.

3. The process of claim 1 or 2, further comprising resetting the total set of historical expected damage increments since a previous maintenance in response to a manual inspection occurring.

4. The process of claim 3, wherein resetting the total set of historical expected damage increments since a previous maintenance comprises setting the total set of historical expected damage increments to zero.

5. The process of any preceding claim, wherein computing the expected damage increment comprises using a probabilistic foreign object damage model (220) defined at least in part by previous inspection and usage data.

6. The process of claim 5, wherein the probabilistic foreign object damage model (220) is manually updated in response to new inspection and usage data.

7. The process of claim 5, wherein the probabilistic foreign object damage model (220) is at least partially dependent on a statistical data set.

8. The process of claim 7, wherein the probabilistic foreign object damage model (220) is automatically updated in response to new inspection and usage data.

9. The process of any preceding claim, wherein computing the expected damage increment comprises applying the aircraft usage data to a set of correlation models (222).

**10.** The process of claim 9, wherein the set of correlation models (222) includes at least a material capability model (224) and a vibratory response characterization model (226).

**11.** The process of any preceding claim, further comprising reiterating the process for each blade of at least one stage (60, 22, 24, 44, 42) of the gas turbine engine (10).

**Patentansprüche**

**1.** Computerimplementierter Prozess zum Planen einer Triebwerksinspektion für ein Gasturbinentriebwerk (10), umfassend:

Berechnen einer erwarteten Schadenzunahme auf Grundlage von Flugzeugnutzungsdaten eines einzelnen Fluges, wobei die Flugzeugnutzungsdaten keine Fremdkörpereinschlagserkennung beinhalten;
Berechnen eines kumulierten erwarteten Schadens durch Summieren der erwarteten Schadenzunahme mit einem Gesamtsatz von historischen erwarteten Schadenzunahmen seit einer vorherigen Wartung;
Bestimmen eines Gesamtausfallrisikos auf Grundlage des berechneten kumulierten erwarteten Schadens; und
Signalisieren einer manuellen Inspektion als Reaktion darauf, dass das Gesamtausfallrisiko einen akzeptablen Risikoschwellenwert überschreitet (142),
wobei das Berechnen der erwarteten Schadenzunahme Bestimmen einer erwarteten Schadenzunahme bei jedem Modus einer Schwingung, die in dem Triebwerk angeregt wird, und Summieren der Zunahme über alle Modi umfasst, um die erwartete Schadenzunahme für einen spezifischen Flug zu bestimmen.

**2.** Prozess nach Anspruch 1, wobei der akzeptable Risikoschwellenwert (142) im Bereich von 1/100.000 bis 1/10.000 liegt.

**3.** Prozess nach Anspruch 1 oder 2, ferner umfassend Zurücksetzen des Gesamtsatzes von historischen erwarteten Schadenzunahmen seit einer vorherigen Wartung als Reaktion darauf, dass eine manuelle Inspektion erfolgt.

**4.** Prozess nach Anspruch 3, wobei das Zurücksetzen des Gesamtsatzes von historischen erwarteten Schadenzunahmen seit einer vorherigen Wartung Setzen des Gesamtsatzes von historischen erwarteten Schadenzunahmen auf Null umfasst.

**5.** Prozess nach einem der vorhergehenden Ansprüche, wobei das Berechnen der erwarteten Schadenzunahme Verwenden eines probabilistischen Fremdkörperschadenmodells (220) umfasst, das mindestens teilweise durch vorherige Inspektions- und Nutzungsdaten definiert ist.

**6.** Prozess nach Anspruch 5, wobei das probabilistische Fremdkörperschadenmodell (220) als Reaktion auf neue Inspektions- und Nutzungsdaten manuell aktualisiert wird.

**7.** Prozess nach Anspruch 5, wobei das probabilistische Fremdkörperschadenmodell (220) mindestens teilweise von einem statistischen Datensatz abhängt.

**8.** Prozess nach Anspruch 7, wobei das probabilistische Fremdkörperschadenmodell (220) als Reaktion auf neue Inspektions- und Nutzungsdaten automatisch aktualisiert wird.

**9.** Prozess nach einem der vorhergehenden Ansprüche, wobei das Berechnen der erwarteten Schadenzunahme Anwenden der Flugzeugnutzungsdaten auf einen Satz von Korrelationsmodellen (222) umfasst.

**10.** Prozess nach Anspruch 9, wobei der Satz von Korrelationsmodellen (222) mindestens ein Materialfähigkeitsmodell (224) und ein Schwingungsreaktions-Charakterisierungsmodell (226) beinhaltet.

**11.** Prozess nach einem der vorhergehenden Ansprüche, ferner umfassend Wiederholen des Prozesses für jede Schaufel mindestens einer Stufe (60, 22, 24, 44, 42) des Gasturbinentriebwerks (10).

**Revendications**

**1.** Procédé mis en œuvre par ordinateur pour planifier une inspection de moteur pour un moteur à turbine à gaz (10) consistant à :

calculer une augmentation de dommages attendue sur la base des données d'utilisation d'aéronef d'un seul vol, dans lequel les données d'utilisation d'aéronef omettent la détection de collision avec un objet étranger ;
calculer un dommage cumulatif attendu en additionnant l'augmentation de dommages attendue avec un ensemble total d'augmentations de dommages attendues historiques depuis une maintenance précédente ;
déterminer un risque global de défaillance basé sur le dommage cumulatif attendu calculé ; et
signaler une inspection manuelle en réponse au risque global de défaillance dépassant un seuil de risque acceptable (142),

dans lequel le calcul de l'augmentation de dommages attendue comprend la détermination d'une augmentation de dommages attendue à chaque mode de vibration qui est excité dans le moteur, et la somme de l'augmentation sur tous les modes pour déterminer l'augmentation de dommages attendue pour un vol spécifique.

2. Procédé selon la revendication 1, dans lequel le seuil de risque acceptable (142) est situé dans la plage allant de 1/100 000 à 1/10 000.

3. Procédé selon la revendication 1 ou 2, comprenant également la réinitialisation de l'ensemble total d'augmentations de dommages attendues historiques depuis une maintenance précédente en réponse à la survenue d'une inspection manuelle.

4. Procédé selon la revendication 3, dans lequel la réinitialisation de l'ensemble total d'augmentations de dommages attendues historiques depuis une maintenance précédente comprend la réinitialisation de l'ensemble total d'augmentations de dommages attendues historiques.

5. Procédé selon une quelconque revendication précédente, dans lequel le calcul de l'augmentation de dommages attendue comprend l'utilisation d'un modèle probabiliste de dommages causés par des objets étrangers (220) défini au moins en partie par les données d'inspection et d'utilisation précédentes.

6. Procédé selon la revendication 5, dans lequel le modèle probabiliste de dommages causés par des objets étrangers (220) est mis à jour manuellement en réponse à de nouvelles données d'inspection et d'utilisation.

7. Procédé selon la revendication 5, dans lequel le modèle probabiliste de dommages causés par des objets étrangers (220) dépend au moins en partie d'un ensemble de données statistiques.

8. Procédé selon la revendication 7, dans lequel le modèle probabiliste de dommages causés par des objets étrangers (220) est mis à jour automatiquement en réponse à de nouvelles données d'inspection et d'utilisation.

9. Procédé selon une quelconque revendication précédente, dans lequel le calcul de l'augmentation de dommages attendue comprend l'application des données d'utilisation d'aéronef à un ensemble de modèles de corrélation (222).

10. Procédé selon la revendication 9, dans lequel l'ensemble de modèles de corrélation (222) comprend au moins un modèle de capacités matérielles (224) et un modèle de caractérisation de réponse vibratoire (226).

11. Procédé selon une quelconque revendication précédente, comprenant également la répétition du procédé pour chaque pale d'au moins un étage (60, 22, 24, 44, 42) du moteur à turbine à gaz (10).

FIG.1

EP 4 124 921 B1

100

PROVIDE AIRCRAFT USAGE DATA ⌐110

COMPUTE DAMAGE INCREMENT ⌐120

COMPUTE CUMULATIVE INCREMENT ⌐130

COMPUTE PROBABILITY OF FAILURE ⌐140

OUTPUT INSPECTION REQUIREMENT ⌐150

PERFORM MAINTENACE → RESET

⌐160 ⌐170

**FIG.2**

**FIG.3**

**FIG.4**

EP 4 124 921 B1

% FATIGUE LIMIT

TIME, min

FIG.5

CUMULATIVE DAMAGE VALUES

FIG.6

FAILURE PROBABILITIES

FIG.7

FOD FAILURE RISK

FIG.8

**EP 4 124 921 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2018328221 A1
- EP 3736778 A1